# EUROPEAN PATENT APPLICATION

(11) **EP 1 978 757 A1**
(43) Date of publication of application: **08.10.2008**
(21) Application number: 06828439.7
(22) Date of filing: 22.12.2006
(51) Int. Cl.: H04Q 3/00

(54) **METHOD AND SYSTEM FOR INTELLIGENT NETWORK SERVICE APPLICATION**

(30) Priority: 28.12.2005 CN 200510121504
(71) Applicant: Huawei Technologies Co., Ltd., Longgang District, Shenzhen Guangdong 518129 (CN)
(72) Inventor: TANG, Jiang, GuangDong 518129 (CN)
(74) Representative: Pfenning, Meinig & Partner GbR
(86) International application number: PCT/CN2006/003552
(87) International publication number: WO 2007/073685

(57) **Abstract**

A method and a system for applying service are disclosed, wherein the method includes: adapting and loading a human-machine language and a corresponding interface definition language which are relevant in a human-machine language application side and a service unit; implementing a corresponding adaptive conversion between the human-machine language and the interface definition language in accordance with the requirement of the human-machine language application side or the service unit. The present invention also provides correspondingly a service application system and an adapter device. With the invention, automatic conversion of a protocol request and an operation revocation can be enabled between the human-machine language MML and the interface definition language IDL, and openness of a service can be high. Simply through dynamically loading and updating a configuration file, a universal channel for information interaction and exchange can be provided for the human-machine language MML and the interface definition language IDL, and thus the service can be both of high universality and easy to maintain.

## Description

This application claims the priority of the Chinese Patent Application No. 200510121504.X, filed with the Chinese Patent Office on December 28, 2005, entitled "METHOD AND SYSTEM FOR INTELLIGENT NETWORK SERVICE APPLICATION", the content of which is hereby incorporated by reference.

### Field of the Invention

The present invention relates to the field of communication technologies, and in particular to a method and a system for intelligent network service application.

### Background of the Invention

The intelligent network language is a human-machine language (MML), which typically refers to a command line interface based upon a text protocol and will be referred to as "MML" hereinafter.

The MML is described in detail as follows.

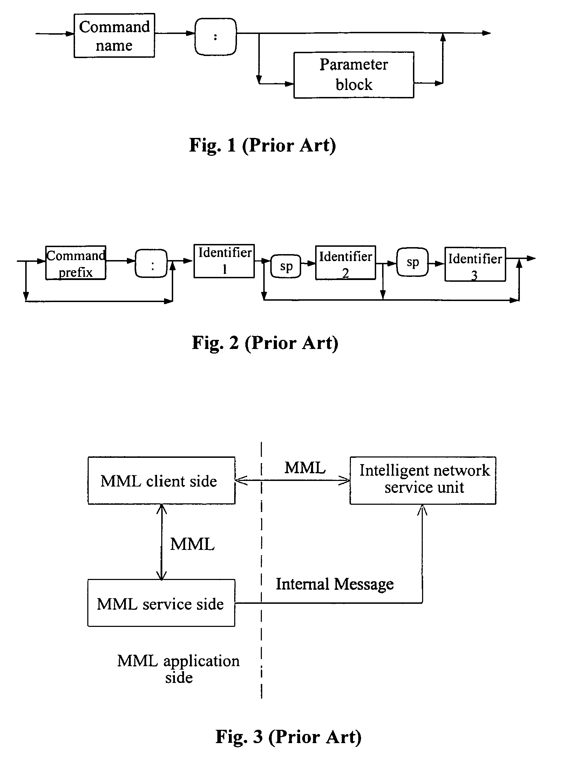

1. The format of an MML command is illustrated in Figure 1, which includes a command name, a parameter block and a separator.

2. Description of respective elements of the MML command is depicted in Table 1.

**Table 1**

| Component Name | Function | Note |
|---|---|---|
| *Command Name* | To specify a function that the service should implement. | A command must begin with a command name. |
| *Parameter Block* | To provide more information if necessary. | A parameter block can be omitted. |
| *Separator (colon)* | To separate a command name and a parameter block. | A colon can be omitted when there is no a parameter block. |

3. Command Name

A command name consists of a command prefix and a command body. The command prefix and the command body are separated by a colon ":" therebetween. There is no difference between uppercase and lowercase command manes.

The command prefix is used to identify roles of a command, and may have meanings as depicted in Table 2.

**Table 2**

| Command Prefix | Meaning |
|---|---|
| ACK | Indicating that the command is a response command. |
| MON | Indicating that the command is a detection command |
| NOTIFY | Indicating that a message is notified. |

The command body consists of three identifiers at most, which are separated by blank spaces from each other. The command body may be of a format as illustrated in Figure 2.

All the identifiers have a maximum length of 8 bytes, and have roles as depicted in Table 3.

**Table 3**

| Identifier Name | Role | Note |
|---|---|---|
| Identifier 1 | Indicative of an action execution | |
| Identifier 2 | Indicative of a service handled by the action execution | |
| Identifier 3 | Indicative of an object entity of the action execution | |

4. Parameter Block

The parameter block provides necessary information for functions specified in the command name. The parameter block can be omitted if the functions specified in the command name do not need to be provided with additional information.

The parameter block consists of one or more parameters. In the case of more than two parameters, the respective parameters can be separated by a comma "," therebetween. In the case that there are a plurality of parameters in the parameter block, the order of the parameters has no influence on the execution result of the command.

An Interface Definition Language (IDL) is a language for describing an interface between a client party which generates the object invocation and a service party which provides the object implementation.

An interface defined by the IDL can describe a full definition of the interface, and give the parameters required for each operation in detail, and thus provide information required for developing client applications by using the interface operations.

The IDL is a purely descriptive language. The service control does not employ the IDL, but is developed with specific programming languages derived from interface mapping defined by the IDL.

In the field of intelligence networks, as illustrated in Figure 3, the MML application side, which acts as an MML client side, initiates a service request to the intelligence network service in an uplink direction, and in a downlink direction the intelligence network service initiates an MML request invocation to the MML application side, which acts as an MML service side.

In the conventional technology, an MML client side accesses an intelligent network service unit, which requires the service to be capable of identifying the MML command. Only after the MML command is parsed by the service unit, the MML command can be converted into specific operations to perform logical processing. Upon completion of the logical processing, the processing result is converted into a corresponding MML command to be returned to the MML client side. In this case, the intelligent network service unit makes its service capability open to an external MML client side, and thus has to provide a corresponding MML interface and a logic implementation corresponding to the MML interface.

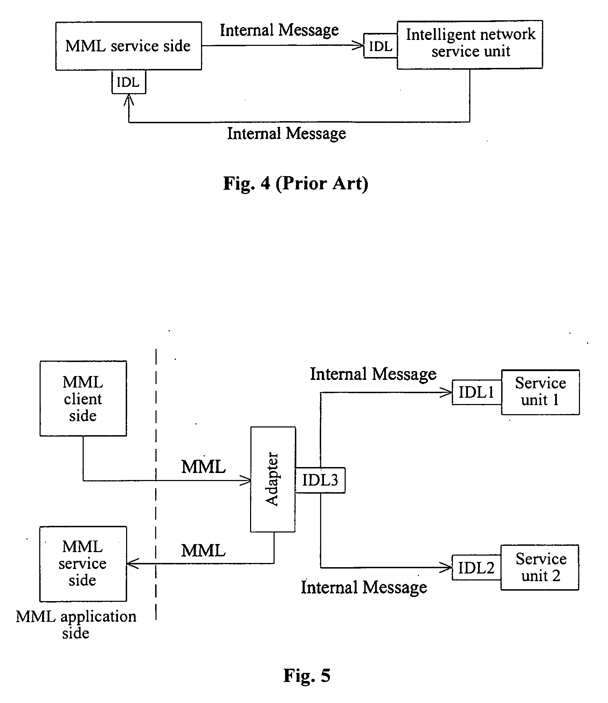

In fact, as illustrated in Figure 4, between the MML service side and the intelligent network service unit a private interface is typically employed, e.g. an Internal Message interface shown in Figure 4, and the invocation there-between can be accomplished through an IDL remote interface invocation.

As shown in Figure 4, the access for the MML service side to the intelligence network service unit involves the interoperation accomplished through an invocation of the IDL remote interface provided by the intelligence network service unit. Thus, the two parties are only required to provide their own IDL interface descriptions, that is, the service capability interface opened to the outside by the service itself is described in the form of the IDL, to be referred to when being invoked by an external service. A logic implementation of the service itself does not need to be taken into account.

As can be seen, in the case that a mutual access between services is enabled through provision of an interface defined with the IDL, a purely MML client can not make a direct invocation. The request initiated by the MML client side is an invocation request in compliance with the MML protocol and only if the service to be accessed has accomplished the parsing of the MML protocol, the request can be converted into a corresponding interface invocation. Specifically, in the conventional technology, the service that makes the service capability open to the MML client side has to support the MML language, and thus the openness of the service may be restricted.

Any change of each MML interface poses a direct influence upon the service that implements the MML parsing, thus the service cannot be stable, and a secondary development for the service is required so as to maintain the service capability provided by the service to the outside being coupled with the MML protocol, which results in a high maintenance cost.

### Summary of the Invention

Embodiments of the present invention provide a method and a system for intelligent network service application to provide a universal channel for information interaction and conversion, so that the service is of high universality and easy to maintain.

An embodiment of the present invention provides a method for configuring service, including: establishing and loading an adaptive relationship between a human-machine language, MML, and an interface definition language, IDL, which are relevant in a human-machine language application side and a service unit; and performing an adaptive conversion between the MML and the IDL in accordance with the requirement of the human-machine language application side or the service unit.

Another embodiment of the present invention provides a method for applying service, wherein performing an adaptive conversion between a human-machine language, MML, and an interface definition language, IDL, includes: initiating an MML protocol request invocation, or initiating an IDL remote invocation; invoking a configuration file; converting the MML request into a corresponding IDL interface invocation, or converting the IDL invocation into an MML protocol request, in accordance with the configuration file; and initiating the IDL remote invocation to a corresponding service, or initiating the MML request invocation to a human-machine language application side.

Another embodiment of the present invention further provides a system for applying service including a human-machine language application side, an adapter and a service unit, wherein the service unit is configured to have an interface definition language, IDL, service capability provided to the outside; the adapter is configured to be provided with an adaptive relationship between a human-machine language, MML, and an IDL and performing an adaptive conversion between the MML and the IDL in accordance with a requirement of the human-machine language application side and the service unit.

Still another embodiment of the present invention provides an adapter including: a plurality of interface modules respectively configured to communicate with a human-machine language application side, a service side and a service unit; a storage module configured to set up and store an adaptive relationship between a human-machine language, MML, and an interface definition language, IDL; and a processing module configured to performs a corresponding adaptive conversion based upon the adaptive relationship and in accordance with the requirement of the human-machine language application side and the service.

To sum up, according to the embodiments of the invention, the MML and the corresponding IDL, which are relevant in the MML application side and the service, are adapted and loaded, and the corresponding adaptive conversion is implemented between the MML and the IDL by the adapter in accordance with the requirement of the MML application side or the service. Actually, automatic conversion of the protocol request and operation invocation can be achieved between the MML and the IDL. When the service makes its service capability open to the MML client side, the MML protocol parsing and the corresponding MML logic implementation do not need to be paid attention to. Thus, the service is highly opened, and the dynamically loading and updating of the configuration file will be sufficient regardless of whether the MML command word or the interface descriptions of the service capability is required to be modified or a service is made open or newly added. The adaptive application actually provides for the MML and the IDL a universal channel for information interaction and conversion. Therefore, in the embodiments of the present invention, the service is of high universality. Furthermore, any change of the MML interface does not influence the stability of the service, and does not give rise to a secondary development, so that the maintenance cost which would occur thereby can be avoided and the system update and maintenance cost can be kept as low as possible.

### Brief Descriptions of the Drawings

Figure 1 is a schematic diagram of a format of the human-machine language command;
Figure 2 is a schematic diagram of a format of the command body in the human-machine language;
Figure 3 is a schematic diagram of information interaction between a human-machine language application side and an intelligent network service in the conventional technology;
Figure 4 is a schematic diagram of the invocation between services in the conventional technology;
Figure 5 is a schematic diagram of application architecture according to an embodiment of the present invention;
Figure 6 is a schematic diagram of a general control flow according to an embodiment of the present invention;
Figure 7 is a schematic diagram of an uplink adaptation control flow according to an embodiment of the present invention;
Figure 8 is a schematic diagram of a downlink adaptation control flow according to an embodiment of the present invention;
Figure 9 is a schematic diagram of an adaptation control update flow according to an embodiment of the present invention;
Figure 10 is a schematic diagram of an adaptation control update flow according to an embodiment of the present invention;
Figure 11 is a schematic diagram of an adaptation control update flow according to an embodiment of the present invention;
Figure 12 is a schematic diagram of an adaptation status update according to an embodiment of the present invention; and
Figure 13 is a schematic diagram of an adaptation control update flow according to an embodiment of the present invention.

### Detailed Descriptions of the Embodiments

The present invention is described in detail in connection with the drawings and embodiments, so that the principle, features and advantages of the invention become more apparent.

Referring to Figure 5, an intelligent network service system according to a specific embodiment of the present invention is exemplified. The service system includes a human-machine language application side, an adapter and related service units. As illustrated in Figure 5, the MML application side includes an MML client side and an MML service side. The service unit 1 provides a service capability IDL1 to the outside. The service unit 2 provides a service capability IDL2 to the outside. The adapter service provides a service capability IDL3.

The adapter establishes an adaptive relationship between the MML and the IDL, and performs corresponding adaptive conversion in accordance with the requirement of the human-machine language application side and the service.

The adapter contains therein a configuration file, which includes a correspondence relationship between the IDL interface descriptions of the service capability provided to the outside by the service and an external MML command.

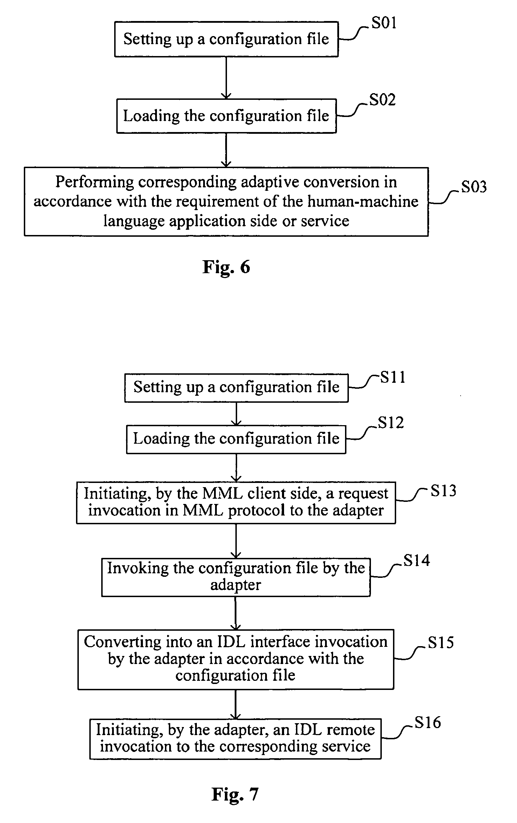

As illustrated in Figure 5 and Figure 6, a general adaptation control flow according to an embodiment of the present invention is as follows.

In block S01, the adapter sets up a configuration file in accordance with the MML and the corresponding IDL, which are relevant in the human-machine language application side and the service units. The configuration file contains the relationship between the IDL interface description of the service capability provided to the outside by the service units and the external MML command.

The configuration file may be based on a text file of the extensible markup language (XML) format. The configuration file includes a service name, a command name and the IDL interface description. The service name corresponds to the corresponding command name and the IDL interface description. The specific description is as follows.

The service name is the name for a service.

The command name is an MML command to which the service capability of the service unit corresponds.

The IDL interface description includes an interface name and a method name.

For example, when a service AAA, which provides a service capability of "GET USER COUNT", is generated, its IDL interface is INTF1, its method name is MED1, and its corresponding MML command name is "GET USER COUNT".

As another example, for a service BBB which provides a service capability of "activate service", its MML command name is "ACTIVATE SERVICE", its IDL interface name is INTF2 and its method name is MED2.

Further, when a service unit accesses a "notice unregister" capability of an external MML service side, the MML command word is "NOTICE UNREGISTER", the service name is configured as the service name "MMLADPT" of the MML adapter, and its universal interface name and method name are "INTF3" and "MED3", respectively.

As depicted in Table 4 below, the above respective relationships are shown.

**Table 4**

| Command Name | Service Name | Interface Name | Method Name |
|---|---|---|---|
| GET USER COUNT | AAA | INTF1 | MED1 |
| ACTIVATE SERVICE | BBB | INTF2 | MED2 |
| NOTICE UNREGISTER | MMLADPT | INTF3 | MED3 |

In block S02, the adapter loads the configuration file into the memory.

In block S03, the adapter performs corresponding adaptive conversion between the MML and the IDL in accordance with the requirement of the human-machine language application side or the service units.

As described in Figure 5 and Figure 7, the uplink adaptation control flow is exemplified as follows.

In block S11, the adapter sets up a configuration file in accordance with the MML and the corresponding IDL which are relevant in the human-machine language application side and the service units. The configuration file reflects the relationship between the IDL interface description of a service capability provided to the outside by the service unit and an external MML command.

In block S12, the adapter loads the configuration file into the memory.

In block S13, the MML client side initiates an MML protocol request invocation to the adapter.

In block S14, the adapter invokes the configuration file after receiving the MML request.

In block S15, the adapter converts the request into an IDL interface revocation in accordance with the configuration file.

In block S16, the adapter initiates an IDL1 remote invocation to the service unit 1. The invocation at this time is enabled through an Internal Message communication.

Through the above blocks 1 to 6, the uplink adaptation is implemented.

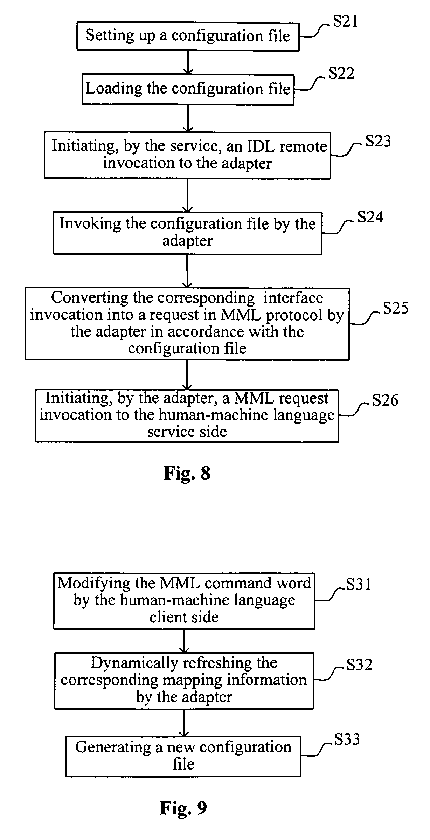

As described in Figure 5 and Figure 8, the downlink adaptation control flow is exemplified as follows.

In block S21, the adapter sets up a configuration file in accordance with the MML and the corresponding IDL which are relevant in the human-machine language application side and the service units. The configuration file reflects the correspondence relationship between the IDL interface description of a service capability provided to the outside by the service unit and the external MML command.

In block S22, the adapter loads the configuration file into the memory.

In block S23, the service unit 2 initiates to the adapter an IDL remote invocation, and here the used invocation interface is an IDL3 remote invocation interface provided by the adapter.

In block S24, the adapter invokes the configuration file after receiving the IDL invocation.

In block S25, the adapter converts the interface invocation that the IDL remote invocation corresponds to into an MML protocol request in accordance with the configuration file.

In block S26, the adapter initiates the MML request invocation to the human-machine language service side.

Through the above blocks 1) to 6), the downlink adaptation is implemented.

With respect to the adaptation of the responses corresponding to the requests of the uplink adaptation and downlink adaptation, the adapter returns the responses in original request invocation paths.

In the above uplink adaptation and downlink adaptation, the adapter is required to search the memory for the mapping relationship described in the MML mapping file. The searching for a match can be done in two ways. One way is to find the corresponding "interface name" and "method name" in accordance with the "command name" or "service name", thereby performing the uplink adaptation. The other way is to find the corresponding MML "command word" in accordance with the "service name", "interface name" or "method name", thereby performing the downlink adaptation.

In the present invention, after completion of the above adaptive conversion, the adapter can dynamically refresh or load the relevant mapping information in accordance with an update at the human-machine language application side or the service unit, thereby generating a new configuration file.

For example, as illustrated in Figure 9, a control flow is particularly described as follows.

In block S31, the human-machine language client side modifies the MML command word.

In block S32, the adapter dynamically refreshes the corresponding mapping information.

In block S33, a new configuration file is generated.

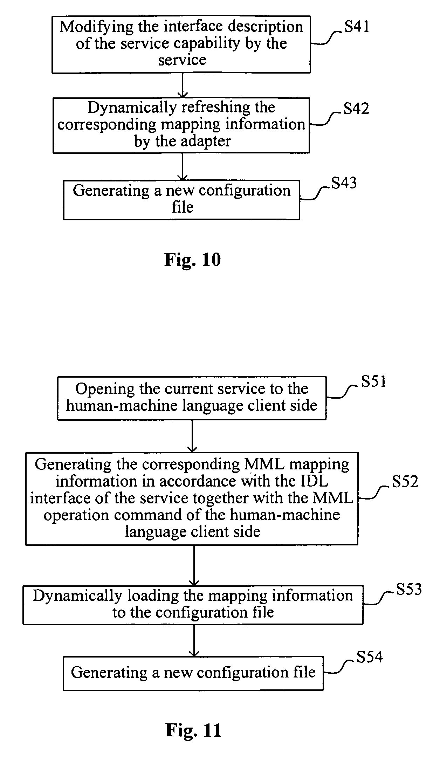

As another example, a control flow is illustrated in Figure 10.

In block S41, the interface description of the service capability in the service unit is modified.

In block S42, the adapter dynamically refreshes the corresponding mapping information.

In block S43, a new configuration file is generated.

As still another example, a control flow is illustrated in Figure 11.

In block S51, a current service is opened to the human-machine language client side.

In block S52, the adapter generates the corresponding MML mapping information in accordance with the IDL interface of the service unit in combination with the MML operation command of the human-machine language application side.

In block S53, the mapping information is dynamically loaded into the configuration file.

In block S54, a new configuration file is generated.

For example, a service CCC provides a "get service count" capability to the outside, with its IDL interface name to the outside being INTF4 and its method name being MED4, but the service CCC does not make the capability open to any MML client side.

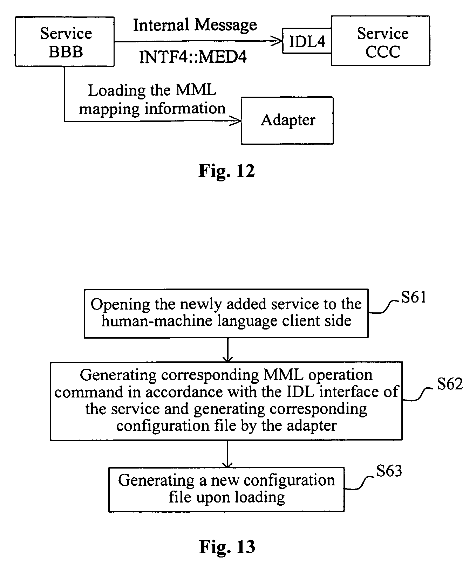

As illustrated in Figure 12, at this time, another service BBB can use the service capability of the service CCC by invoking the remote interface and method INTF4::MED4 of the service CCC through an internal message.

After the service CCC operates for a period of time, the service CCC is required to make the service capability of "GET SERVICE COUNT" being opened to the MML client side as client demands increase. As illustrated in Figure 12, at this time, a piece of MML mapping information only needs to be newly configured by the service BBB. The adapter generates MML mapping information and dynamically loads it into the configuration file, and thereby it can be satisfied that the capability of the service CCC be made open to the external MML client side.

As another example, a control flow is particularly illustrated in Figure 13.

In block S61, a newly added service is made open to the human-machine language client side.

In block S62, in accordance with the IDL interface of the service, a corresponding MML operation command is generated, and a configuration file is generated.

In block S63, a new configuration file is generated after loading.

The above embodiments are illustrative and descriptive of the principle of the invention. It should be understood that the specific embodiments of the invention are not limited to these. It will be apparent to those skilled in the art that various modifications and variations made without departing from the spirit and scope of the invention shall fall into the claimed scope of the invention.

## Claims

1. A method for configuring service, comprising:
establishing and loading an adaptive relationship between a human-machine language, MML, and an interface definition language, IDL, which are relevant in a human-machine language application side and a service unit; and
performing an adaptive conversion between the MML and the IDL in accordance with the requirement of the human-machine language application side or the service unit.

2. The method for applying service according to claim 1, wherein the establishing the adaptive relationship between the MML and the IDL comprises:
setting up a configuration file which reflects a correspondence relationship between the IDL interface description of a service capability provided by the service unit to the outside and an external MML command; and
loading the configuration file into a memory.

3. The method for applying service according to claim 2, wherein the configuration file comprises a service name, a command name and an IDL interface description, the service name corresponds to the corresponding command name and the IDL interface description, wherein
the service name is the name of the service;
the command name is the MML command that the service capability of the service unit corresponds to; and
the IDL interface description comprises an interface name and a method name.

4. The method for applying service according to claim 3, wherein the configuration file is a text file of the extensible markup language, XML, format.

5. A method for applying service, wherein performing an adaptive conversion between a human-machine language, MML, and an interface definition language, IDL, comprises:
initiating an MML protocol request invocation, or initiating an IDL remote invocation;
invoking a configuration file;
converting the MML request into a corresponding IDL interface invocation, or converting the IDL invocation into an MML protocol request, in accordance with the configuration file; and
initiating the IDL remote invocation to a corresponding service, or initiating the MML request invocation to a human-machine language application side.

6. The method for applying service according to claim 5, wherein the remote invocation is performed by an internal message communication.

7. The method for applying service according to claim 5, further comprising:
dynamically refreshing or loading the relevant mapping information in accordance with the update at the human-machine language application side or the service unit; and
generating a new configuration file.

8. The method for applying service according to claim 7, wherein the dynamically refreshing or loading comprises:
modifying the MML command word by the human-machine language application side;
dynamically refreshing the corresponding mapping information; and
generating a new configuration file.

9. The method for applying service according to claim 7, wherein the dynamically refreshing or loading comprises:
modifying the interface description of the service capability of the service unit;
dynamically refreshing the corresponding mapping information; and
generating a new configuration file.

10. The method for applying service according to claim 7, wherein the dynamically refreshing or loading comprises:
opening the current service unit to the human-machine language application side;
generating the corresponding MML mapping information in accordance with the IDL interface of the service unit in combination with an MML operation command of the human-machine language application side;
dynamically loading the mapping information into the configuration file; and
generating a new configuration file.

11. The method for applying service according to claim 7, wherein the dynamically refreshing or loading comprises:
opening a newly added service to the human-machine language application side;
generating a corresponding MML operation command in accordance with the IDL interface of the service so as to generate a corresponding configuration file; and
generating a new configuration file after loading.

12. A system for applying service, comprising a human-machine language application side, wherein the system further comprises an adapter and a service unit,
wherein the service unit is configured to have an interface definition language, IDL, service capability provided to the outside;
the adapter is configured to be provided with an adaptive relationship between a human-machine language, MML, and an IDL and performing an adaptive conversion between the MML and the IDL in accordance with a requirement of the human-machine language application side and the service unit.

13. An adapter, comprising:
a plurality of interface modules respectively configured to communicate with a human-machine language application side, a service side and a service unit;
a storage module configured to set up and store an adaptive relationship between a human-machine language, MML, and an interface definition language, IDL; and
a processing module configured to perform a corresponding adaptive conversion based upon the adaptive relationship and in accordance with the requirement of the human-machine language application side and the service.
